# EUROPEAN PATENT APPLICATION

(11) **EP 1 152 361 A1**
(43) Date of publication of application: **07.11.2001**
(21) Application number: 01303839.3
(22) Date of filing: 26.04.2001
(51) Int. Cl.: G06F 17/60, G08G 1/14, G07C 9/00

(54) **Freight units handling monitoring method and system**

(30) Priority: 03.05.2000 GB 0010703
(71) Applicant: Dart Line Limited, Dartford, Kent DA2 6QB (GB)
(72) Inventor: Hyde, Robin J., Canterbury, Kent CT4 7TA (GB)
(74) Representative: Addison, Ann

(57) **Abstract**

The present invention provides a security method for controlling the handling of freight units at a transport location. The method comprises generating at least one record (64, 84) representing a given freight unit, allocating to the unit a security code (72, 90), and storing the security code in association with the at least one record (114). In response to initiation of a predetermined handling operation, the security method requests the security code, verifies whether the requested security code corresponds with the security code stored in association with the at least one record (140, 164), and provides an indication in the event that the requested and the stored security codes do not correspond (144).

## Description

This invention concerns a security method and system for controlling the handling of freight units at a transport location. In particular, the invention concerns a security method and system for controlling the handling, and especially the release, of cargo transport units in a port.

Currently, the handling of cargo transport units in a port involves little monitoring, and no specific security measures are taken to prevent the unauthorised release of such units from the port.

Cargo transport units may arrive in the port either by road, rail or air or by sea and the; may likewise be collected from the port either by road, rail or air or by sea. Their passage through the port may involve storage for an indefinite duration. The only records normally kept in respect of the cargo transport units are those relating to bookings and reservations for transport, including the reservations of freight places on particular cargo routes and the associated transport vehicles or vessels on certain dates.

It has not been usual to keep records for the entry into, and exit from, the port of the individual cargo transport units. Furthermore, it has not been usual to make security checks on the cargo transport units passing into and out of a port, other than for customs purposes.

It is an aim of the present invention to provide a security method and system for controlling the handling of freight units at a transport location.

Another aim of the present invention is to provide a system for monitoring the passage of freight units into and/or out of a transport location, particularly for monitoring the passage of the freight units for security purposes.

In particular, in a preferred form of the invention at least, it is an aim to provide a security method and system for controlling the passage of freight units into and/or out of a transport location, such as a port.

Another aim of the present invention, at least in its preferred form, is to provide a security check on freight units at a transport location and to flag up an indication in the event of a failure to comply with such security checks.

Another aim of the present invention, at least in its preferred form, is to provide a security system designed to inhibit or prevent release of freight units from a transport location in the event of a failure to comply with a security check.

In a general sense, the present invention provides a method for monitoring the handling of freight units at a transport location, comprising:
providing an identification code in respect of each freight unit, and
employing the identification code for monitoring handling operations in respect of the respective freight unit.

Correspondingly, the present invention also provides a monitoring system for controlling the handling of freight units at a transport location, comprising:
means for generating an identification code for each freight unit,
means for storing the identification code, and
means for employing the identification code for monitoring the handling of each freight unit.

In accordance with another aspect of the present invention, there is provided a security method for controlling the handling of freight units at a transport location, comprising:
generating at least one record representing a given freight unit,
allocating to the unit a security code,
storing the security code in association with the at least one record, and
in response to initiation of a pre-determined handling operation:
   requesting the security code,
   verifying whether the requested security code corresponds with the security code stored in association with the at least one record, and
   providing an indication in the event that the requested and the stored security codes do not correspond.

In accordance with a further aspect of the present invention, there is provided a security system for controlling the handling of freight units at a transport location, comprising:
means for storing at least one record representing a given freight unit,
means for generating a security code allocated to the given freight unit,
means for storing the security code in association with the at least one record,
means for receiving an instruction to initiate a predetermined handling operation,
means responsive to the instruction for requesting the security code,
means for verifying whether the requested security code corresponds with the security code stored in association with the at least one record, and
means for providing an indication in the event that the requested and the stored security codes do not correspond.

As an added security measure, advantageously the security code once allocated is unavailable to the operator at the transport location but is made available to the cargo owner, or a nominated agent.

Preferably, the at least one record comprises one or more of: a booking record relating to reservations for passage of the freight unit on a particular vessel, an entry record relating to entry of the freight unit into the transport location, and a pre-release record relating to an application for release of the freight unit from the transport location.

In a preferred embodiment of the invention, the indication is employed for inhibiting and/or preventing further handling of the freight unit in the event that the requested and the stored security codes do not correspond.

Advantageously, the indication further involves the issue of a security notification.

In a preferred form of the invention described below, the predetermined handling operation constitutes release of the freight unit from the transport location, and such release is prevented unless the requested security code is verified to correspond with the stored security code.

Advantageously, the security code comprises a security PIN having a predetermined number of digits, for example a five-digit security PIN number.

Preferably the security PIN is produced by:
generating a first random number,
generating a second random number, and
combining the first and second random numbers together.

In order to ensure that the security PIN thus generated has the requisite number of digits, one or more predetermined digits may be added at one or more predetermined digit positions to make up the full complement.

The invention is described further, by way of example, with reference to the accompanying drawings, in which:
Figure 1 is a schematic diagram of an overall communication system by which customers and port authorities are linked to a central monitoring and control system incorporating the present invention;
Figure 2 is a schematic diagram of the hardware for the communication system shown in Figure 1;
Figure 3 is a flow diagram representing a first portion of the central monitoring system according to the present invention;
Figure 4 is a flow diagram of a second portion of the central monitoring system according to the present invention; and
Figure 5 is a flow diagram representing the generation of a security PIN as shown in Figure 3.

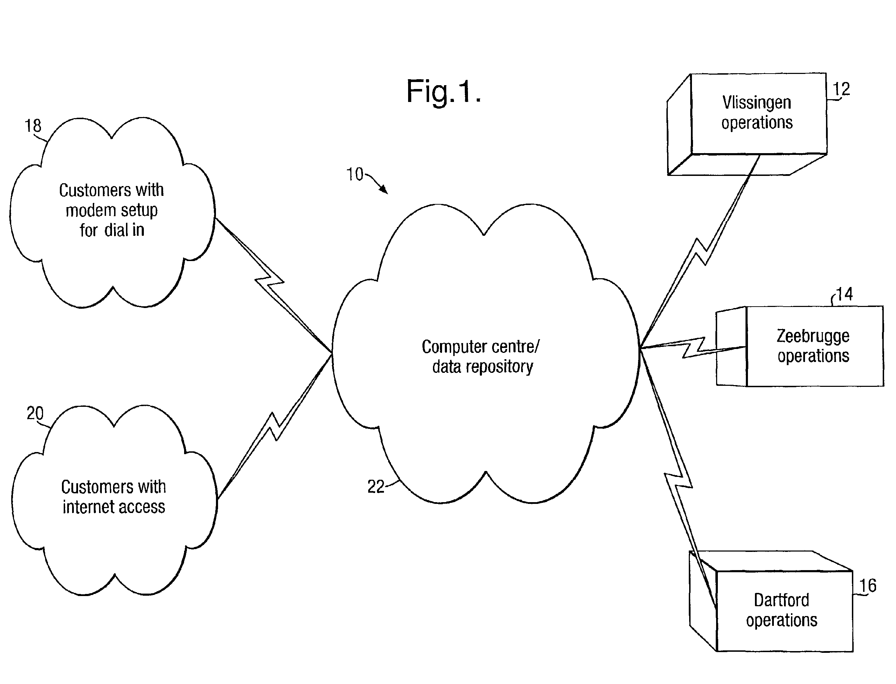

Referring initially to Figure 1, this shows a communication system 10 by which a series of ports 12, 14 and 16, and groups of freight customers 18 and 20 all have access to a central monitoring and control system 22 according to the present invention. As described below, the central monitoring system 22 records and monitors bookings for the reservation of freight places on particular vessels for the sea transport of individual cargo transport units, as well as the passage of respective cargo transport units through the ports 12, 14 and 16.

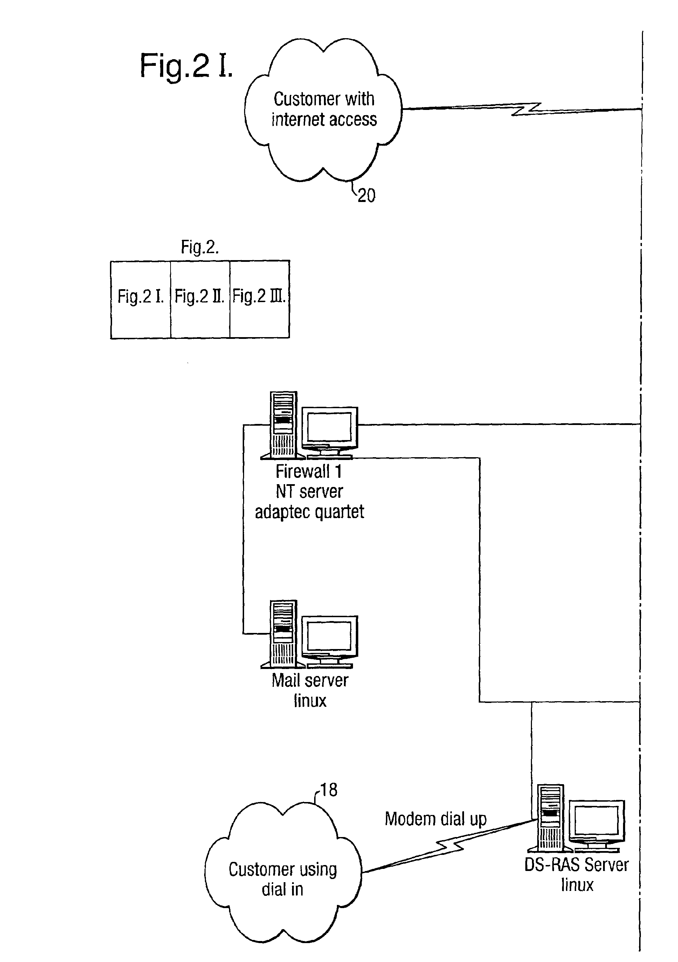

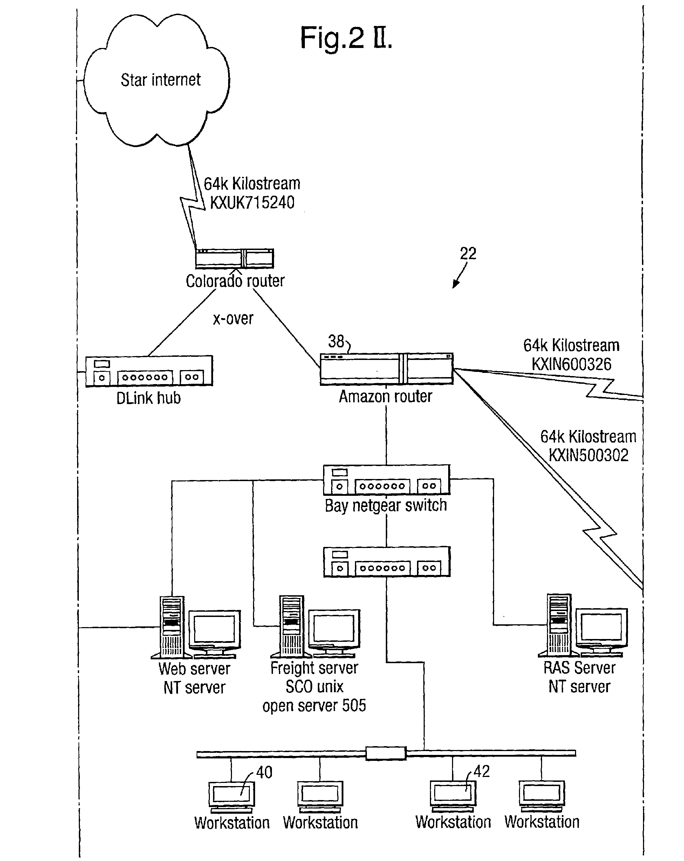

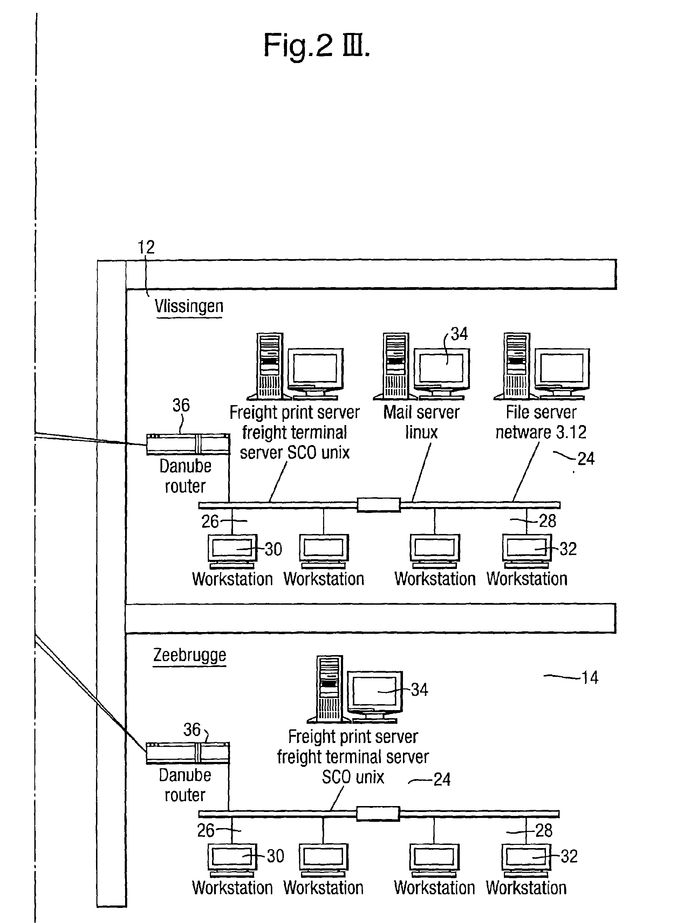

As shown in Figure 1, bookings may be made by fax or by e-mail by customers 18 having modem connections to the central monitoring system 22, and directly over the Internet by customers 20 having Internet access. Bookings may also be made by customers directly at the main site including the central monitoring system 22 or at any one of the ports 12, 14 and 16 through respective port operating systems 24 (see Figure 2).

Entry of cargo transport units into, and exit of the same from, any one of the ports 12, 14 and 16 is also logged onto the central monitoring system 22 as described below.

Turning to Figure 2, the operating systems 24 at two of the ports 12, 14 and the central monitoring system 22 are shown in somewhat greater detail.

As shown, each port 12, 14 has a respective reception 26 at each of a number of first gates for entry into and exit from the port by road, rail or air, as well as a respective reception 28 at each of a number of second gates for entry into and exit from the port by sea. In order to pass through any one of the gates, the driver of a cargo transport vehicle or vessel must first present themselves to the associated reception 26 or 28. Here, the details of the or each cargo transport unit are entered at a work station 30, 32 into the processing system 34 of the port. All such details are transmitted by way of respective routers 36, 38 to the central monitoring system 22 for storage and monitoring as described below.

Access to the central monitoring system 22 may additionally be obtained through work stations 40, 42 on site and, of course, by way of fax, e-mail and the Internet for customers 18 and 20 as described in relation to Figure 1. Such access may be required either by the customers 18, 20 or by the owners of the system 22 for data entry and updating and for the inspection of existing records as required.

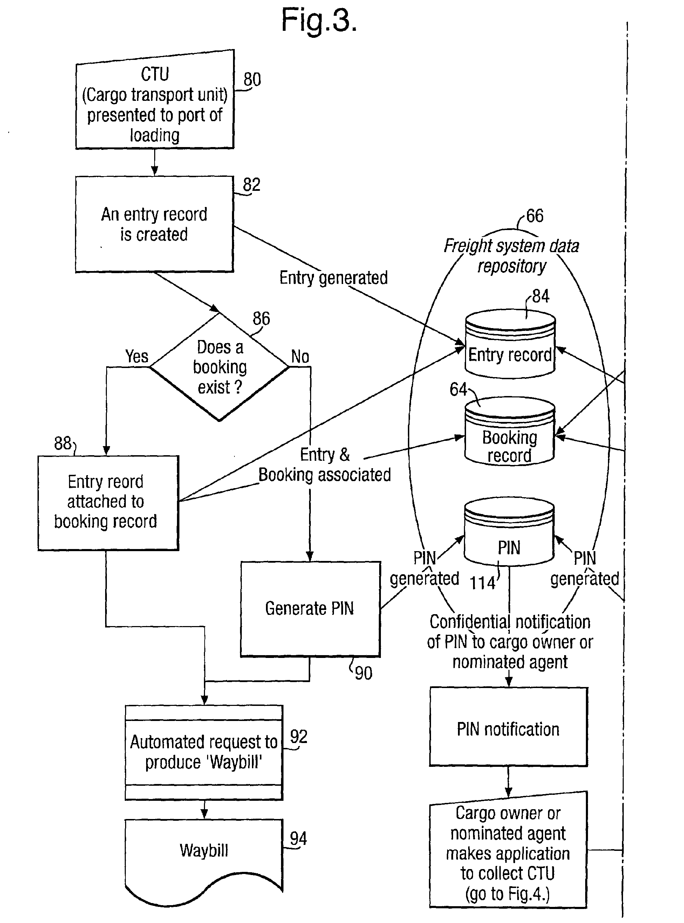

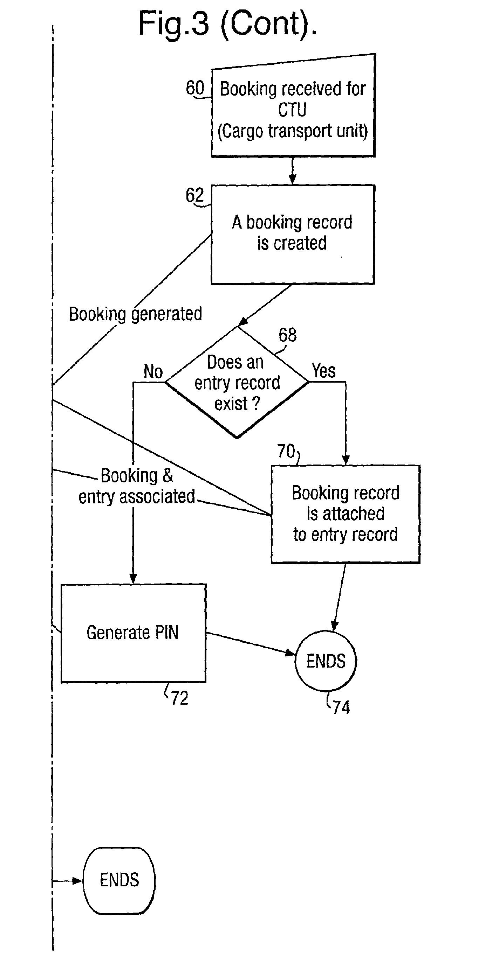

Turning now to Figures 3 to 5, the operation of the central monitoring system 22 will be described in greater detail.

Initial access to the central monitoring system 22 in respect of a particular cargo transport unit will take place in one of two ways:
(a) A booking will be received for the reservation of a place on a particular sea vessel on a certain date, either from one of the customers 18 or from one of the customers 20 as described above or directly through one of the work stations 30, 32, 40 and 42.
   Or
(b) A transport vehicle or vessel carrying a cargo transport unit will present itself to one of the gates of the port and a port operator will access the system 22 through one of the work stations 30, 32.

In the first instance, when a booking is received, the central monitoring system 22 will initiate a series of steps shown on the right hand side of Figure 3. In the second instance, when a transport vehicle or vessel presents itself at a port gate, the central monitoring system will initiate a series of steps shown on the left hand side of Figure 3.

Referring first to the booking process, a booking is received in step 60 and a booking record is created in step 62 containing details of the cargo transport unit, including the name of the customer, the customer registration number for that particular cargo transport unit, the weight and volume of the cargo transport unit, and the relevant sailing reservation details. The booking record is stored in a booking record store 64 in a central data repository 66.

In step 68, the central system 22 makes a check, by reference to the customer registration number, as to whether the cargo transport unit is already logged into the data repository 66. For example, an entry record may already exist in the data repository 66 for the cargo transport unit if the cargo transport unit has previously been presented to a gate of the port and is currently in store in the port. If the check generates the answer "Yes", the booking record and the entry record are associated in step 70. If the check generates the answer "No", a security PIN is generated in step 72 in a manner to be described below. The booking process is now terminated in step 74.

Reference is now made to the process occurring when a cargo transport unit is presented either by land or by sea to a gate of the port in step 80. An entry record is first created for the cargo transport unit in step 82, containing details of the company depositing the unit, the customer registration number, the weight and volume of the unit, and perhaps a freight storage location in the port. The entry record is also required to indicate whether the cargo transport unit is to be given security status or not. The entry record is transmitted to the data repository 66 and is stored in an entry record store 84.

Next, by reference to the customer registration number, a search is made in step 86 through the booking record store 64 in the data repository 66 to establish whether a booking record already exists for the cargo transport unit. If the answer is "Yes", the entry record and the booking record are associated with one another in step 88. If the answer is "No", then a security PIN is generated in step 90 in the same manner as in step 72, to be described below.

In either event, the process on depositing the cargo transport unit at the port culminates in step 92 in an automated request to produce a Waybill. A Waybill document is now printed out in step 94, containing all the details of the cargo transport unit as well as details of the port of deposit.

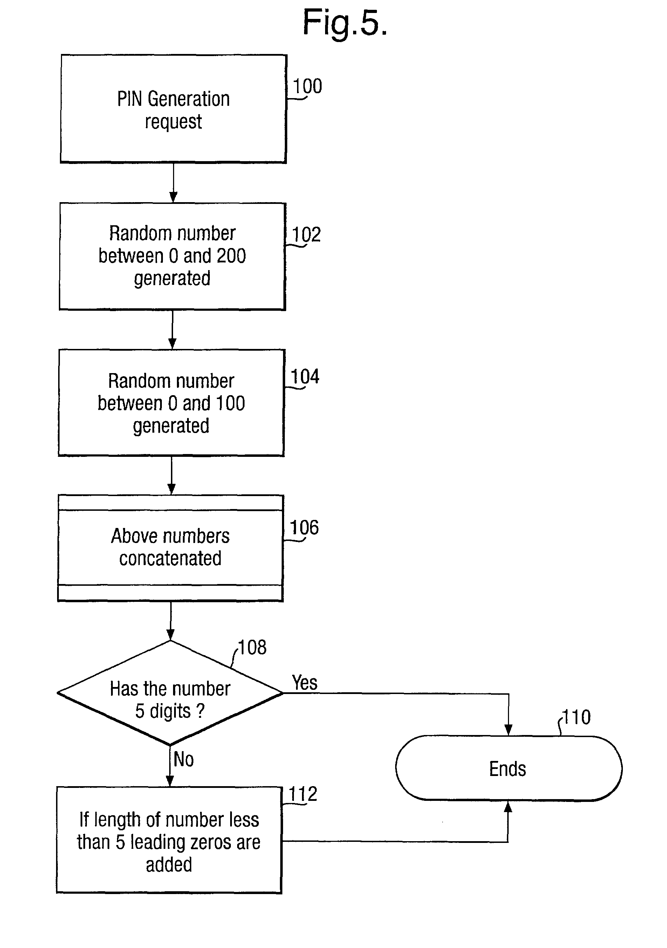

Generation of the security PIN in steps 72 or 90 is illustrated in Figure 5. As shown, a request for a security PIN made in step 100 prompts a random number generator in step 102 to generate a number between 0 and 199 by means of a standard programme employing the Universe databasic RND functions. Similarly a random number generator in step 104 generates a number between 0 and 99, again by means of a standard programme employing the Universe databasic RND Function.

Subsequently the two random numbers - one of them normally a three digit number and one of them normally a two digit number - are concatenated by placing them side by side to form a five digit number in step 106. In some circumstances, the number obtained in step 106 will have less than five digits if one of the random numbers generated in steps 102 and 104 has less than three or less than two digits, respectively. Therefore, in step 108 a check is made as to whether the number obtained in step 106 has five digits or less.

If the resulting number is found to have the full five digits, it is output as the security PIN in step 110. On the other hand, if the number obtained in step 106 is found to have less than five digits then in step 112 additional digits are added at pre-determined digit positions. In the present instance, the additional digits are zeros added at the front of the number, until the full five digits are obtained. Step 112 having generated a five-digit number, this number is now output as the security PIN in step 110.

The five-digit security PIN is entered in a PIN store 114 in the data repository 66 for purposes to be described below. Once the PIN number has been generated and stored in the PIN store 114, it is thereafter made available directly, by fax, e-mail or the Internet, to the owner of the cargo transport unit, or to a nominated agent, but to no one else. The PIN number is not available to the port operator or authority.

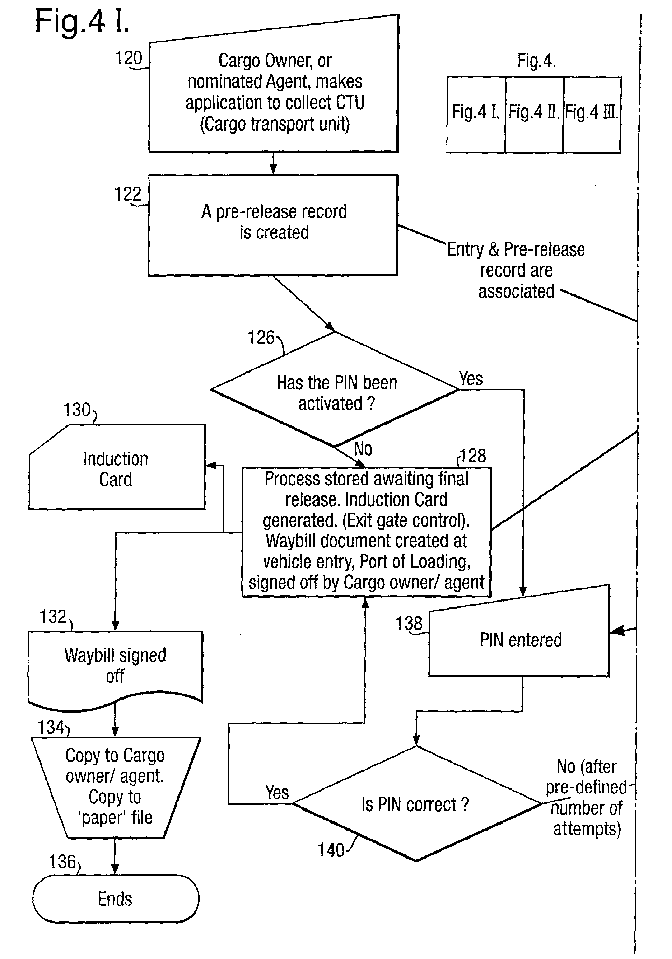

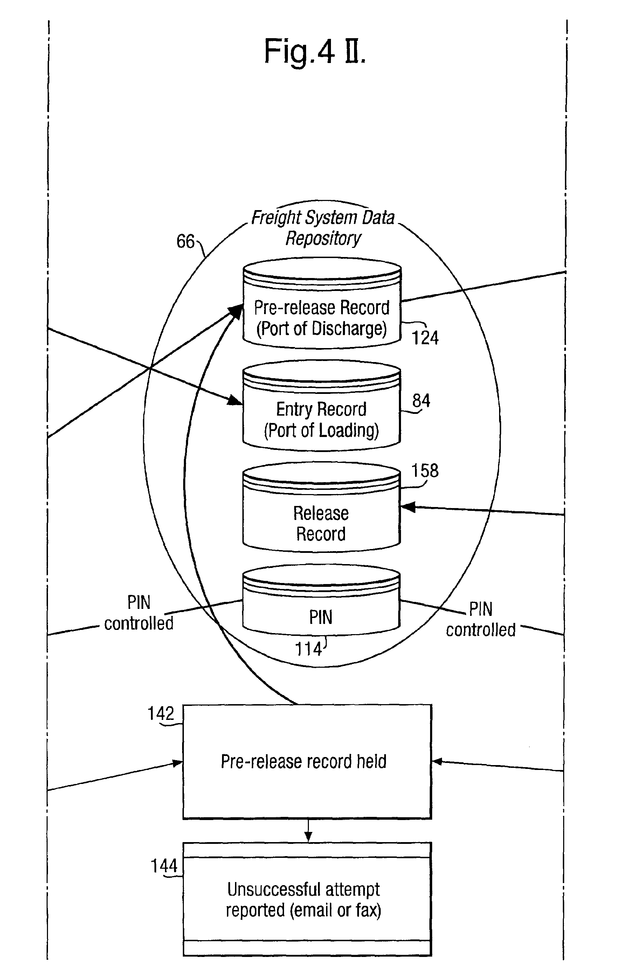

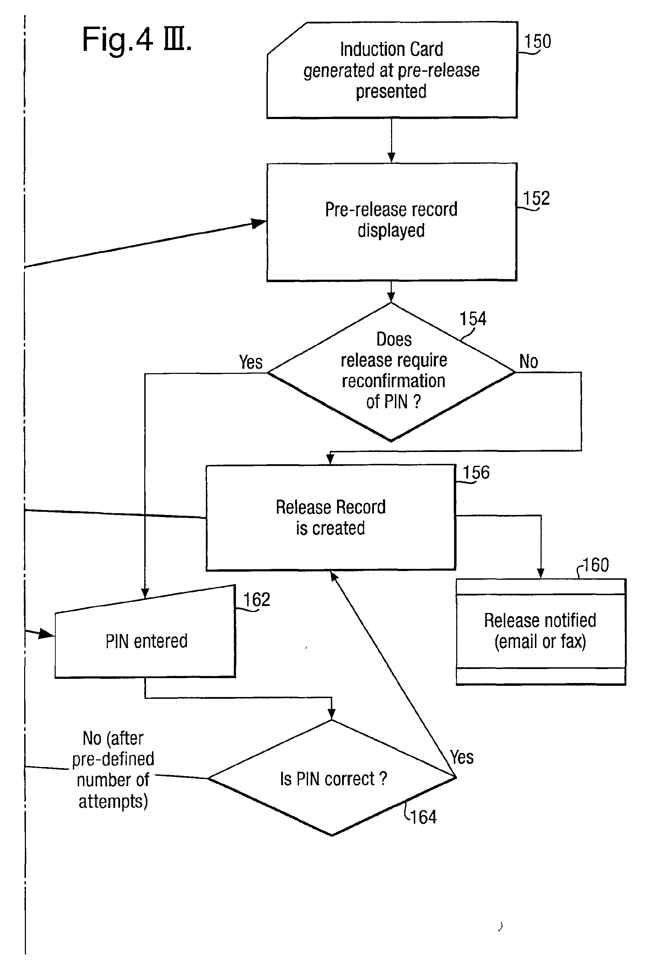

Turning next to Figure 4, the processing steps in the central monitoring system 22 involved in the release of a cargo transport unit from the relevant port will now be described. The full release process is in two stages, the first being a pre-release sequence shown on the left hand side of Figure 4 and the second being a release sequence shown on the right hand side of Figure 4.

In the pre-release sequence, the cargo owner, or a nominated agent, makes an application to the port to collect the cargo transport unit and this is entered into the system 22 in step 120. In order to make the application, the owner must supply details of the cargo transport unit, including particularly the customer registration number.

Next, in step 122, the system 22 creates a pre-release record containing details of the cargo owner, the customer registration number, the date of release etc. The pre-release record is transmitted to the data repository 66 and is stored in a pre-release record store 124. At the same time, by reference to the customer registration number, a search is made through the entry records store 84 in the data repository 66 for an entry record corresponding to the cargo transport unit. Once the entry record has been located, a check is made in step 126 as to whether the entry record shows that the cargo transport unit has been given security status, in which case the security PIN entered in the entry record will have been activated.

If the answer is "No", the unit is stored in step 128 pending final release, and an induction release card is issued in step 130. Simultaneously, the original Waybill document produced when the cargo transport unit was deposited at the port is signed off in step 132 and a copy is sent in step 134 to the cargo owner, or nominated agent. In step 134, a copy of the signed off Waybill is also consigned to a paper file. The pre-release process is thus terminated in step 136.

If the security PIN was found in step 126 to have been activated in the entry record, the person making application to collect the cargo transport unit is requested by the system 22 in step 138 to enter the security PIN. A verification is then made in step 140 as to whether or not the security PIN has been entered correctly, by searching the security PIN store 114. If the answer is "Yes", the pre-release process continues through steps 128 to 136 as described above.

On the other hand, if it is found in step 140 that the security PIN has been entered incorrectly, either on the first occasion or, if desired, after a pre-determined number of attempts at repeating step 138, the pre-release record is retained in step 142. This acts as a first indication that an unsuccessful attempt has been made to enter the security PIN. No induction release card is issued, and the Waybill is not signed off. Then, in step 144 the unsuccessful attempt to enter the security pin is reported to the customer as a second indication that an unsuccessful attempt has been made to enter the security PIN.

If the pre-release process shown on the right hand side of Figure 4 has been successfully completed and an induction card has been issued, the applicant for collection of the cargo transport unit can proceed to the final release stage shown on the right hand side of Figure 4.

The process for final release of the cargo transport unit begins with the cargo owner, or nominated agent, presenting the induction release card at the gate of the port, where the card details are read into the system 22 in step 150. Such details will include the customer registration number, by means of which the pre-release record is located in the pre-release record store 124 of the data repository 66 and is displayed in step 152.

The displayed pre-release record indicates in step 154 whether or not the cargo transport unit has been given security status and thus whether or not a reconfirmation of the security PIN is required. If the answer is "No", the system creates a release record in step 156 and transmits this to a release record store 158 in the data repository 66. The cargo transport unit is thereby released, and the release is notified by the system 22 in step 160 to the customer, cargo owner or nominated agent.

On the other hand, if the display of the pre-release record shows in step 156 that the security PIN has to be reconfirmed, then the person collecting the cargo transport unit is required by the system 22 in step 162 once again to enter the security PIN. In step 164, a verification is made as to whether the security PIN just entered corresponds with the security PIN in the security PIN store 114 for the cargo transport unit having the particular customer registration number. If the answer is "Yes", the release process proceeds to steps 156 to 160 as before, and the release record is created and the cargo transport unit is released.

However, if the verification made in step 164 determines, either on the first occasion or after a pre-determined number of attempts to enter the security PIN at step 162, that the security PIN has been entered incorrectly, then the release process proceeds once again to step 142. As described above, the pre-release record is held in step 142, and a security notification that the security PIN was not entered correctly is despatched in step 144 to the customer, cargo owner, or nominated agent. In addition, the cargo transport unit is also held by the port and release is refused.

It will be appreciated that a number of modifications are possible in the system described above without departing from the scope of the present invention.

In particular, the described system envisages applying both the deposit procedure and the release procedure to every cargo transport unit both entering or leaving a single one of the ports 12, 14 and 16 either by road, rail or air or by sea. It is equally possible to arrange for the deposit procedure to take place at one of the ports when a unit is deposited at the port for sea transport and for the release procedure to take place at a different port following the sea transport when the unit is collected by land or air. In this instance, the sea transport of the units would not be subject to the same security checks but only the port loading of the units from their source and the port unloading of the units for their eventual destination.

It is also possible to omit altogether the facility for choosing whether or not to allocate security status to an individual unit, and simply to require the entry of a security PIN in every case before release is authorised.

In a modification of the invention, it is also possible to permit customer access to the various stored records for purposes of inspection, and even to permit customer alteration of the security code. For example the customer may, by entering the customer registration number for a particular cargo transport unit, obtain access to all of the associated records. At the same time, the system 22 may be programmed to offer the customer the opportunity to change the security PIN.

The present invention has been described with reference to a sea port, and to the arrival of cargo transport units in the port by land, air or sea for transport by sea. It is equally possible to apply the present invention to an airport, and to the arrival of cargo transport units in the port by land, air or sea for transport by air.

It will be seen that the described central monitoring system provides a high security method for monitoring the passage of freight units to and through ports, and other transport locations, and for ensuring the release of cargo transport units only to bona fide recipients. This is a significant advance over existing port monitoring arrangements.

## Claims

1. A security method for controlling the handling of freight units at a transport location, comprising:
generating at least one record representing a given freight unit,
allocating to the unit a security code,
storing the security code in association with the at least one record, and
in response to initiation of a pre-determined handling operation:
requesting the security code,
verifying whether the requested security code corresponds with the security code stored in association with the at least one record, and
providing an indication in the event that the requested and the stored security codes do not correspond.

2. A method according to claim 1 further comprising inhibiting and/or preventing further handling in response to the indication.

3. A method according to claim 1 or 2 further comprising issuing a security notification in response to the indication.

4. A method according to any preceding claim in which the at least one record comprises one or more of:
a booking record representing a booking for transport, an entry record representing deposit of a freight unit at the transport location, and a pre-release record representing an application to collect the freight unit from the transport location.

5. A method according to any preceding claim in which the pre-determined handling operation comprises release of the freight unit from the transport location.

6. A method according to any preceding claim in which the security code comprises a security PIN.

7. A method according to claim 6 further comprising generating the security PIN by:
generating a first random number,
generating a second random number, and
combining the first and second random numbers to provide the security PIN.

8. A method according to claim 7 in which the security PIN has n digits, and further comprising adding predetermined digits at predetermined digit positions if the combined first and second random numbers have less than n digits.

9. A method according to any preceding claim comprising permitting customer alteration of the security code.

10. A method according to claim 9 comprising:
storing a unique customer registration number for each freight unit in the at least one record,
providing customer access to the at least one record on identification of the respective customer registration number, and
subsequently allowing the customer to view and amend the security code.

11. A security system for controlling the handling of freight units at a transport location, comprising:
means for storing at least one record representing a given freight unit,
means for generating a security code allocated to the given freight unit,
means for storing the security code in association with the at least one record,
means for receiving an instruction to initiate a predetermined handling operation,
means responsive to the instruction for requesting the security code,
means for verifying whether the requested security code corresponds with the security code stored in association with the at least one record, and
means for providing an indication in the event that the requested security code does not correspond with the stored security code.

12. A system according to claim 11 further comprising means for inhibiting and/or preventing the predetermined unit handling operation in response to the indication.

13. A system according to claim 11 or 12 in which the at least one record comprises one or more of:
a booking record representing a booking by the customer for transport of the freight unit, an entry record representing deposit of the freight unit at the transport location, and a pre-release record representing an application for release of the freight unit from the transport location.

14. A system according to any of claims 11 to 13 in which the predetermined handling operation comprises release of the freight unit from the transport location.

15. A system according to any in claims 11 to 14 in which the security code comprises a security PIN.

16. A system according to claim 15 further comprising means for generating the security PIN, the said means comprising:
means for generating a first random number,
means for generating a second random number, and
means for combining the first and second random numbers.

17. A system according to claim 16 in which the security PIN has n digits and which further comprises means for adding pre-determined digits at pre-determined digit positions if the combined first and second random numbers have less than n digits.

18. A system according to any of claims 11 to 17 further comprising means for permitting customer alteration of the security code, the said means comprising:
means for storing a unique customer registration number for each freight unit in the at least one record,
means permitting customer access to the record on identification of the registration number,
means for displaying the at least one record, and
means for permitting amendment of the security code stored in association with the displayed record.

19. A method for monitoring the handling of freight units at a transport location, comprising:
providing an identification code in respect of each freight unit, and
employing the identification code for monitoring handling operations in respect of the respective freight unit.

20. A monitoring system for controlling the handling of freight units at a transport location comprising:
means for generating an identification code for each freight unit,
means for storing the identification code, and
means for employing the identification code for monitoring the handling of each freight unit.
